# EUROPEAN PATENT SPECIFICATION

(11) **EP 3 393 056 B1**
(45) Date of publication and mention of the grant of the patent: **25.06.2025**
(21) Application number: 16868060.1
(22) Date of filing: 28.11.2016
(51) Int. Cl.: H04B 7/185, H04W 84/06

(54) **HIERARCHICAL NETWORK REGISTRATION METHOD, APPARATUS AND SYSTEM**
HIERARCHISCHES NETZWERKREGISTRIERUNGSVERFAHREN, VORRICHTUNG UND SYSTEM
PROCÉDÉ, APPAREIL ET SYSTÈME D'ENREGISTREMENT DANS UN RÉSEAU HIÉRARCHIQUE

(30) Priority: 28.11.2015 CN 201510856826
(43) Date of publication of application: 24.10.2018
(73) Proprietor: Huawei Technologies Co., Ltd., Longgang District Shenzhen, Guangdong 518129 (CN)
(72) Inventor: LV, Linjun, Shenzhen Guangdong 518129 (CN)
(74) Representative: Körber, Martin Hans
(86) International application number: PCT/CN2016/107506
(87) International publication number: WO 2017/088837

(56) References cited:
- EP-A1- 0 920 142
- EP-A2- 0 762 669
- EP-A2- 0 951 190
- WO-A1-00/19639
- WO-A1-95/27381
- WO-A1-96/28947
- CN-A- 1 328 725
- CN-A- 103 634 041
- US-A- 5 710 805
- US-A1- 2001 004 595
- US-A1- 2008 182 572
- US-A1- 2009 285 150

## Description

### TECHNICAL FIELD

The present invention relates to the field of satellite communications, and in particular, to a hierarchical network registration method, , and a corresponding radio network node.

### BACKGROUND

With years of development, satellite communications technologies are widely applied to the fields of remote sensing, monitoring, logistics tracking, positioning, broadcasting, and broadband services. A present situation of satellite communications is independent development and separate operation. In 1987, mobile phones had a global penetration of less than 10%, an immature technology, and a limited conversation region, and inter-PLMN roaming and switching of the GSM frequently drop. The "Iridium Plan" enables people to communicate at any "place where the sky can be seen" in an interruptible manner, and boosts "a real sense of global communication". A subsequent result is that the GSM has smooth user and service development because of great development in technologies; however, a satellite service is bankrupt because technologies are updated slowly, and services and users cannot support a profit. In addition, formulation and execution of a development strategy of the satellite communications are not adjusted with reference to mobile communications. Therefore, a lesson recognized from development of the satellite communications is: being independent of cellular development, and failing in competition!

Because of wide coverage and a strong tracking capability, the satellite communications still has obtained some development. Although a terrestrial network obtains mass users, because a deployment operator in each country independently deploys a network, a high roaming fee must be paid for a transnational service. In addition, many regions such as a desert and a sea level basically have no signal or weak coverage. Because a satellite network has an indoor coverage problem and a capacity problem, development of an independent service of the satellite network is restricted. Therefore, a technical developmentroute of the satellite network in the future is to integrate with the terrestrial network, and development of the terrestrial network requires supplementing of the satellite network, to form complementary advantages. A user of the terrestrial network preferentially accesses the terrestrial network when a terrestrial network signal is available. This is because the terrestrial network has a large capacity and a low delay. The user of the terrestrial network may access the satellite network when the terrestrial network signal is lost or very poor, for example, in the wild or a desert. To ensure that a service of a terrestrial user is relatively continuous, a set of technologies is required to enable theterrestrial user to quickly switch from the terrestrial network to the satellite network and from the satellite network to the terrestrial network. In this way, a switching processing unit on a satellite establishes an association with an existing radio communications network, and normal signaling interaction in a communication process is performed by using a satellite system.

Before the normal signaling interaction in the communication is performed by using the satellite system, in the prior art, a terminal triggers switching information registration with a satellite router, that is, in the prior art, information registration is based on a user level. Weaknesses are that a capacity of the satellite system is not enough, and cannot support periodical registration of hundreds of millions of users in a short time; besides, in the prior art, the terrestrial user needs to track a signal of the satellite network in real time, resulting in a great challenge to a battery of the terminal of the terrestrial user.

EP0951190A2 discloses methods for switching a mobile between operation in an mobile satellite system mode and a terrestrial wireless mode. When operating in the terrestrial wireless mode, the mobile terminal will initiate an attempt to switch into the MSS mode when it nears the boundary of the coverage area for a terrestrial wireless system to which it is registered. Conversely, a mobile terminal operating in the MSS mode will regularly attempt to switch into the terrestrial wireless mode. For both, a switch between modes is contingent on the mobile terminal identifying a suitable system for registration therewith upon completing the switch between modes. The criteria for identifying a suitable system for selection purposes include the following (1) the selected system is available, i.e., the mobile terminal is physically located within a coverage area for the selected system; (2) the mobile terminal is compatible with the selected system; and (3) the selected system is willing to accept the mobile terminal. If multiple systems meet these criteria, the mobile terminal will utilize a stored list of preferred systems to select therefrom. When switching into the terrestrial wireless mode, the MSS system provides the mobile terminal with switch-over information for the underlying terrestrial wireless systems and, when switching into the MSS mode, the terrestrial wireless system provides the mobile terminal with switch-over information for the overlying MSS systems.

WO00/19639 A1 discloses a method and apparatus for transmitting common information to a plurality of user terminals within a geographic region. The method and apparatus are useful in a satellite communication system (100) having a gateway (120, 122), and a plurality of satellites (116, 118) that orbit such that they are not stationary with respect to a point on the surface of the Earth. The method includes the step of generating a list identifying a plurality of common data channels (702) over which the common information will be transmitted. The list can include, for each of said plurality of common data channels, information identifying a predetermined satellite, beam (401-416), frequency, and channel. Due to the orbiting of the satellites (116, 118), the list changes over time. The method also includes the steps of transmitting (708), from the gateway to the geographic region (502, 504, 520, 522), the common information on the plurality of common data channels. The method also includes receiving (720), at a user terminal (124, 126), the common information over at least one of the plurality of common data channels
US 2009/285150 discloses a method of operating a mobile terminal providing wireless communications can include receiving communications service from a first communications network providing service over a first coverage area. While receiving communications service from the first communications network, a first identity code can be received from a second communications network providing service over a plurality of second coverage areas wherein a first one of the second coverage areas includes the first coverage area and wherein the first identity code from the second communications network identifies availability of service with the second communications network in the first one of the second coverage areas. After loss of communications with the first communications network, a second identity code can be received from the second communications network. When the second identity code from the second communications network is different than the first identity code from the second communications network, a registration can be performed with the second communications network so that communications service can be received by the mobile terminal from the second communications network in a second one of the second coverage areas corresponding to the second identity code from the second communications network.

US 2001/004595 A1 discloses further related technology.

### SUMMARY

Embodiments of the present invention provide an air network registration technology based on a radio base station device level, to support periodical registration of hundreds of millions of users in a short time, and improve service life of a battery of a user terminal. The present invention is defined by the method of independent claim 1 and the apparatus of independent claim 13. Additional features of the invention are presented in the dependent claims. In the following, parts of the description and drawings referring to embodiments which are not covered by the claims are not presented as embodiments of the invention, but as examples useful for understanding the invention.

The embodiments of the present invention are applied to a hierarchical network. A hierarchical network includes one layer of a terrestrial network and at least one layer of an air network. In an embodiment, the air network may be formed by one or more layers of balloon networks (at different heights), or may be formed by one or more layers of satellite networks (at different orbit heights), or may be formed by one or more layers of hybrid networks (balloons and satellites at different heights).

In the hierarchical network, it is assumed that the terrestrial network is geostationary, the air network may move relative to the ground, and particularly, the satellite network, except a synchronous satellite, has a quite large movement speed relative to the ground. The balloon network also has some mobility because of deployment flexibility. Therefore, an area covered and overlapped by a satellite node and a terrestrial radio node continuously changes.

In a process of the continuous change, if communication needs to be performed by using the air network and the terrestrial network, a location of a network node in the air network needs to be obtained in time, and the network node is registered and switched to a newest air network node.

After the solutions in the present invention are used, technical benefits for a hierarchical network and a user of the hierarchical network are as follows:

After a radio network node is registered, the registered radio network node is broadcast to a mobile user. The mobile user may quickly switch a radio link of a data service or a voice service from the ground to an air network node. For the voice service, only a link of a calling user may be switched, and a called user may be switched to the air network node (in this case, an entire voice link is transmitted in an air network, that is, an entire voice service is transmitted in an air network), or the called user may continue staying on a terrestrial link (in this case, the voice link may cross two segments: the air network node and a terrestrial network).

In addition, because a registration procedure is based on a radio network node level, the mobile user does not need to intercept a signal of the air network during communication with the terrestrial network. Therefore, power consumption of the mobile user is reduced.

Because the registration procedure is based on the radio network node level rather than a mobile user level, that thousands of mobile users are registered withthe air network node at a specific interval is omitted, so that a signaling storm is avoided.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic architectural diagram of a hierarchical network according to an embodiment of the present invention;
FIG. 2 is a schematic architectural diagram of a hierarchical network according to an embodiment of the present invention;
FIG. 3 is a schematic architectural diagram of a hierarchical network according to an embodiment of the present invention;
FIG. 4 is a schematic architectural diagram of a hierarchical network according to an embodiment of the present invention;
FIG. 5 is a schematic architectural diagram of a hierarchical network according to an embodiment of the present invention;
FIG. 6 is a schematic diagram of a registration procedure according to an embodiment of the present invention;
FIG. 7 is a diagram of a data session establishment procedure according to an embodiment of the present invention;
FIG. 8 is a schematic diagram of a switching procedure according to an embodiment of the present invention;
FIG. 9 is a flowchart of a voice conversation establishment method according to an embodiment of the present invention;
FIG. 10 is a flowchart of a voice conversation establishment method according to an embodiment of the present invention;
FIG. 11 is a flowchart of a hierarchical network registration method according to an embodiment of the present invention;
FIG. 12 is a flowchart of a quick switching method of a terrestrial mobile user according to an embodiment of the present invention;
FIG. 13 is a flowchart of a data session establishment method according to an embodiment of the present invention;
FIG. 14 is a flowchart of a voice conversation establishment method according to an embodiment of the present invention;
FIG. 15 is a flowchart of a voice conversation establishment method according to an embodiment of the present invention;
FIG. 16 is a structural diagram of a radio network node according to an embodiment of the present invention;
FIG. 17 is a structural diagram of a mobile terminal according to an embodiment of the present invention;
FIG. 18 is a structural diagram of an air gateway node according to an embodiment of the present invention;
FIG. 19 is a structural diagram of an air gateway node according to an embodiment of the present invention;
FIG. 20 is a structural diagram of an air gateway node according to an embodiment of the present invention; and
FIG. 21 is a schematic structural diagram of an intelligent terminal according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

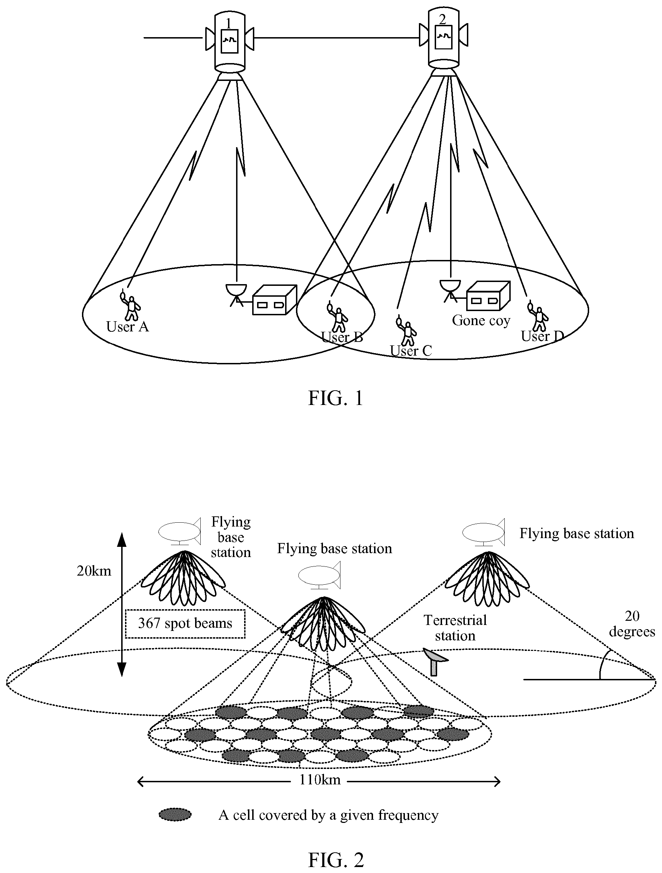

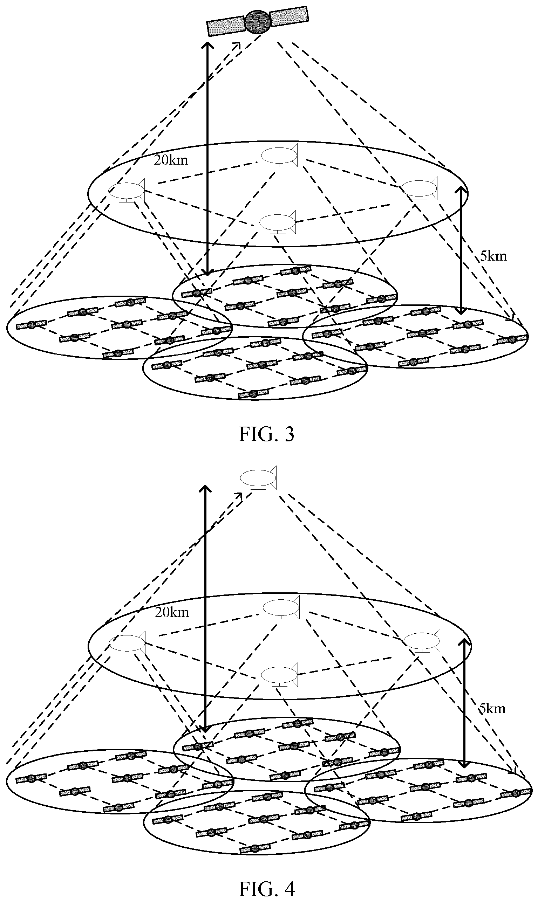

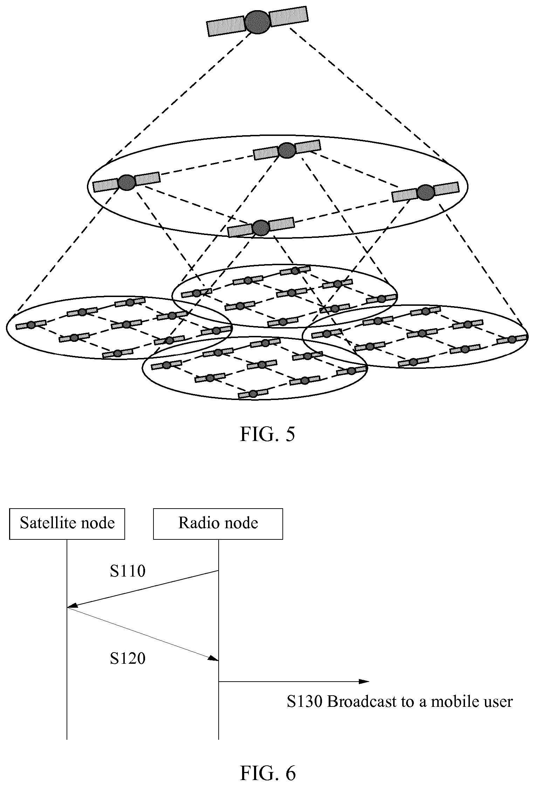

The embodiments of the present invention are applied to a hierarchical network. A hierarchical network includes one layer of a terrestrial network and at least one layer of an air network. In an embodiment, the air network may be formed by one or more layers of balloon networks (at different heights), and as shown in FIG. 2, the hierarchical network is a hierarchical network formed by a two-layer network including one layer of a balloon network and a terrestrial network. Alternatively, the air network may be one or more layers of satellite networks (at different orbit heights), and as shown in FIG. 1, the hierarchical network is a hierarchical network formed by a two-layer network including one layer of a satellite network and a terrestrial network. Alternatively, the air network may be formed by one or more layers of hybrid networks (balloons and satellites at different heights), and as shown in FIG.3, the hierarchical network is a hierarchical network formed by a three-layer network including one layer of a satellite network, one layer of a balloon network, and a terrestrial network. Further, for example, as shown in FIG. 4, the hierarchical network is a three-layer hierarchical network formed by two layers of balloon networks and a terrestrial network. As shown in FIG. 5, the hierarchical network is a three-layer hierarchical network formed by two layers of satellite networks and a terrestrial network.

In the hierarchical network, it is assumed that the terrestrial network is geostationary, the air network may move relative to the ground, and particularly, the satellite network, except a synchronous satellite, has a quite large movement speed relative to the ground. The balloon network also has some mobility because of deployment flexibility. Therefore, an area covered and overlapped by a satellite node and a terrestrial radio node continuously changes.

In a process of the continuous change, if communication needs to be performed by using the air network and the terrestrial network, a location of a network node in the air network needs to be obtained in time, and the network node is registered and switched to a newest air network node.

Mobile users and users mentioned in the following embodiments are all mobile terminals. To enable a person of ordinary skill in the art to understand technical solutions in the embodiments of the present invention more vividly, the solution of this aspect is described in an embodiment of the present invention by using "a two-layer network including one layer of a satellite network and a terrestrial network" as an example.

Embodiment 1: A registration procedure of a hierarchical network formed by a two-layer network including one layer of a satellite and a terrestrial network.

As shown in FIG. 1, in a hierarchical network of a two-layer network formed by one layer of a satellite and a terrestrial network, a radio network node (in an embodiment, the radio network node may be a base station; in an embodiment, the radio network node may be a base station controller; and in an embodiment, the radio network node may be another control node) monitors and receives a signal of a satellite network node periodically. A registration request is initiated in two cases:
(1) The request is periodically initiated.
(2) It is detected that a satellite node receiving a signal changes. For example, the radio network node detects that a satellite node receiving data already changes, and is a new satellite node, or another beam of an original satellite node serves the radio network node.

Specifically, when either of the foregoing two cases is triggered, the radio network node initiates the registration request. According to a specific implementation manner (for example, a base station, a base station controller, or another control node) of a radio network controller, there are the following two initiation solutions:
Solution 1: A base station initiates the registration request.
   The registration request carries attribute information of the base station.
Solution 2: A base station controller/general network controller initiates the registration request.

In this case, the registration request may carry the following three types of information:
method 1: carrying base station attribute information of a base station node managed by the controller;
method 2: carrying attribute information of the controller; or
method 3: carrying revival information of the controller, and in addition, carrying base station attribute information of a base station node managed by the controller.

In an embodiment, the attribute information of the base station is as follows:
MCC: Mobile Country Code, mobile country code (460 for China);
MNC: Mobile Network Code, mobile network code (00 for China Mobile, and 01 for China Unicorn);
LAC: Location Area Code, location area code;
CID: Cell Identity, base station identity, which is 16-bit data (a range is 0 to 65535);
channel list: a radio technology type of each channel, a channel center frequency, bandwidth, and a MIMO multi-antenna type; and
location information: a longitude and latitude of the base station, which may be used for correcting whether the satellite node is overlapped and covered.

In an embodiment, the attribute information of the base station controller is as follows:
MCC: Mobile Country Code, mobile country code (460 for China);
MNC: Mobile Network Code, mobile network code (00 for China Mobile, and 01 for China Unicorn);
LAC: Location Area Code, location area code;
CID: Controller Identity, controller identity, which is 16-bit data (a range is 0 to 65535); and
Location information: a longitude and latitude of the controller, which may be used for correcting whether the satellite node is overlapped and covered.

Embodiment 2: As shown in FIG. 6, an embodiment of the present invention provides a hierarchical network registration method.

S110: A radio network node initiates a registration request to a satellite node covering the radio network node.

In an embodiment, the radio network node may be a base station; in an embodiment, the radio network node may be a base station controller; and in an embodiment, the radio network node may be another control node.

S120: After receiving the registration request, the satellite node adds attribute information and beam information of the satellite node into a registration response message as a result (that is, a registration result) of the registration request and sends the registration response message to the radio network node. The radio network node obtains the registration result of the satellite node, where the registration result includes the attribute information and the beam information of the satellite node.

In an embodiment, the attribute information of the satellite node includes but is not limited to: a satellite number, a satellite orbit, or a satellite height.

In an embodiment, the beam information of the satellite node includes but is not limited to: a beam number, a transmitting center frequency, a receiving center frequency, a transmitting polarization, a receiving polarization, bandwidth, or an equivalent isotropically radiated power (EIRP).

In an embodiment, the satellite node receives the registration request, and sends the attribute information and the beam information of the satellite node to the radio network node as the result of the registration request.

In an embodiment, the attribute information of the satellite node includes but is not limited to: a satellite number, a satellite orbit, or a satellite height.

In an embodiment, the beam information of the satellite node includes but is not limited to: a beam number, a transmitting center frequency, a receiving center frequency, a transmitting polarization, a receiving polarization, bandwidth, or an EIRP (dBW).

S130: The radio network node broadcasts the obtained registration result to a covered mobile user.

It may be learnt from the foregoing procedure that the registration result includes the attribute information and the beam information of a satellite. The radio network node broadcasts satellite information received by the radio network node to the user covered by the radio network node. When the mobile user needs to switch to a satellite network, the mobile user can quickly switch to the satellite network according to the received satellite information (for example, the attribute information and the beam information).

After the foregoing procedure, the satellite node establishes local routing information that uses the radio network node as a user. Satellite nodes mutually exchange local routing information, and the satellite network may establish a global routing table as shown in Table 1. According to the routing table, any satellite node can locally determine to forward, from which satellite route, a signal to any terrestrial radio network node. Optionally, satellite numbers in Table 1 may be numbered across satellite systems, for example, jointly numbered by Global star and Iridium.

**Table 1: Global Routing Table**

| Global routing table number | Mobile country code | Mobile network code | Location area code | Cell number | Location information | Serving satellite number |
|---|---|---|---|---|---|---|
| 1 | 460 | 00 | 1 | 1002 | East longitude: 22.232, and north latitude: 30.781 | #33 |
| 2 | 460 | 00 | 7 | 1003 | | #21 |
| ... | | | | | | |
| N | 460 | 01 | 101 | 1171 | | #66 |

Optionally, in an example not part of the invention but helpful for understanding the invention, because uplink signal quality of the radio node is limited, the radio node may fail to register. However, the radio node may still intercept related information of the satellite node by using a common channel.

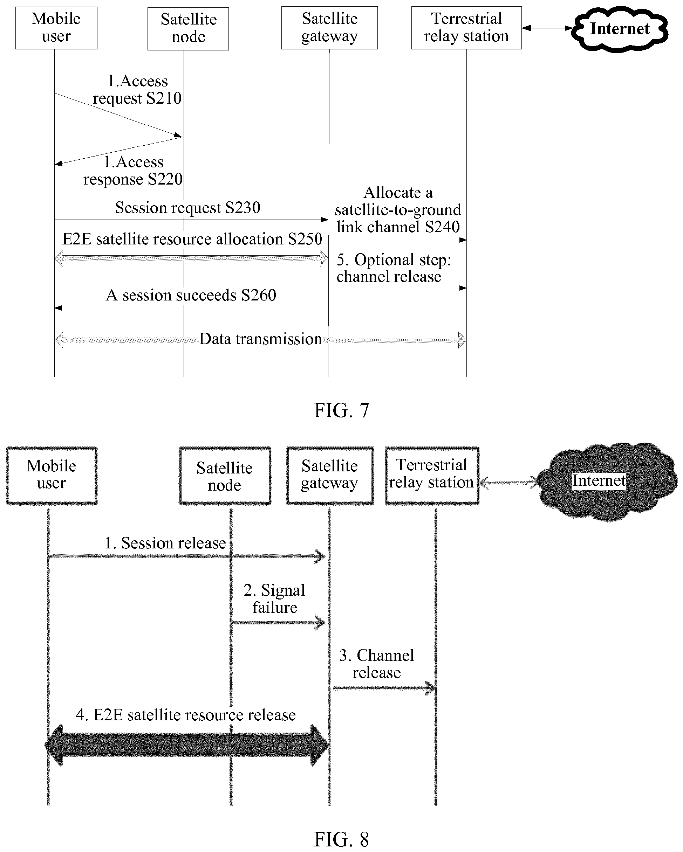

Embodiment 3: As shown in FIG. 7, an embodiment of the present invention provides a data session establishment method. The method relates to switching of a single user from the ground to a satellite network, and can improve performance of signal supplement and switching by the user by using a satellite link.

It may be learnt from the foregoing embodiment that a radio network node broadcasts an obtained registration result to a covered mobile user. After receiving a broadcast message of the radio network node (a base station, a base station controller, or another control node), the mobile user updates attribute information and beam information of a satellite node serving the mobile user. The information may be used for quick switching of the user from the ground to a satellite network.

After a terminal updates signal information of a current satellite network, when a signal on the ground is excessively poor (for example, there is no signal for a long time) or the user performs an operation to select the satellite network, the mobile terminal may quickly switch to the satellite network. Using FIG. 7 as an example, the following describes in detail a process in which a data service of a user is switched from the ground to a satellite network.

S210: A mobile terminal sends an access request to a satellite node.

S220: The satellite node sends an access response to the mobile terminal to indicate successful access, and allocates a signaling channel to the mobile terminal, where the allocated signaling channel is used for establishing a service channel of the mobile user.

S230: The mobile user sends a data session request by using the signaling channel, where the data session request is forwarded to a satellite gateway node by a satellite network.

S240: The satellite gateway node allocates a satellite-to-ground connection resource to a terrestrial relay station for the user, and establishes a channel between a satellite and the terrestrial relay station, where the channel is used for transmitting a data service or data service signaling of the user to an internet and an application server on the ground.

S250: The satellite gateway allocates an end-to-end satellite resource to the mobile user, where the end-to-end satellite resource is used for transmitting the data service of the mobile user between air network nodes. In an embodiment, the end-to-end satellite resource includes an uplink-downlink resource used by the mobile user to access the satellite and an inter-satellite link resource used by the mobile user for forwarding between the satellite node and the satellite gateway node. If the satellite node and the satellite gateway are a same satellite, the inter-satellite link resource between satellites does not exist. After the allocation succeeds, the satellite gateway notifies the mobile user by using the signaling channel of the satellite node.

S260: If the allocation of the end-to-end satellite resource linksucceeds, the satellite gateway feeds back, to the mobile user by using the signaling channel, a session success message to indicate that a session succeeds. In this case, the mobile user establishes a service channel formed by an end-to-end satellite link and a transmission link between the satellite gateway and the terrestrial relay station, to complete switching of the data service from the ground to the satellite network. In this case, the mobile user may communicate with a terrestrial internet by using the service channel.

In an embodiment, if the allocation of the end-to-end satellite resource fails, the satellite gateway node sends an air-to-ground connection resource release request to the terrestrial relay station, to request to release the satellite-to-ground connection resource allocated in step S240. After an air-to-ground connection resource release request response sent by the terrestrial network relay station is received, the satellite-to-ground link resource is released. A failure of the allocation of theend-to-end satellite resource link may be caused due to various factors such as an insufficient resource or an inter-satellite connection failure.

When a satellite link of the mobile user is lost, the mobile user needs to simply switch back to a terrestrial network, and a switching procedure is an access procedure of the current terrestrial network. For example, the terrestrial network is an LTE 4G network, and the mobile user only needs to complete LTE data service access. Alternatively, a signal of the terrestrial network becomes better, and after the mobile user successfully accesses the terrestrial network, the signal may trigger release of the satellite link resource, to complete switching from the satellite to the terrestrial network. A procedure of re-accessing the terrestrial network by the mobile user in the switching process is the same as that of normally accessing the current terrestrial network. Therefore, the procedure is not described again in the following. Only a procedure of requesting, by the mobile user, to release the satellite network resource is described.

As shown in FIG. 8, a procedure of switching, by the mobile user data service, from the satellite to the terrestrial network is as follows.

1. When the mobile user successfully accesses the terrestrial network, the mobile user sends a session release message to the satellite gateway, to request the gateway to release all satellite resources allocated to the mobile user.

2. Alternatively, when the satellite node finds that a signal between the satellite node and the mobile user has been interrupted for a long time, the satellite node sends a user signal failure indication message to the gateway node.

3. The gateway node releases the satellite-to-ground connection satellite resource allocated to the user.

4. The gateway node releases the end-to-end satellite resource allocated to the user.

In an embodiment, the present invention further relates to: switching of dual users from the ground to a satellite network in a voice service. In actual application, for some services, communication is performed between users in a point-to-point manner without centralized processing of a given server in a network, for example, the voice service. If a terrestrial link of two users is lost, the two users may both switch to the satellite network.

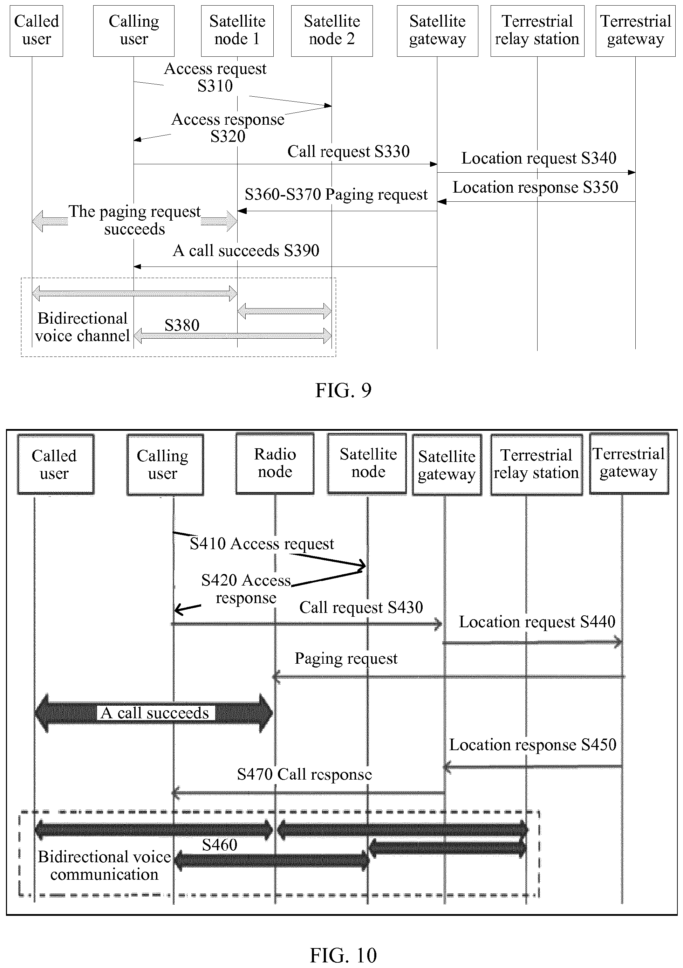

Embodiment 4: As shown in FIG. 9, an embodiment of the present invention provides a voice conversation establishment method, and the method can improve performance of signal supplement and switching by a user by using a satellite link.

According to the foregoing embodiment, after receiving a broadcast message of a radio network node (a base station, a base station controller, or another control node), a mobile user updates attribute information and beam information of a satellite node serving the mobile user. The information may be used for quick switching of the user from the ground to a satellite network. When a signal on the ground is excessively poor (there is no signal for a long time) or the user performs an operation to select the satellite network, the user may quickly switch to the satellite network. Using FIG. 9 as an example, the following describes in detail a process in which a data service of a user is switched from the ground to a satellite network.

S310: A calling mobile user sends an access request to a satellite node 2, where the satellite node 2 is a satellite node covering the calling mobile user.

S320: The satellite node 2 sends an access response to the calling mobile user to indicate successful access, and allocates a signaling channel to the mobile terminal, for completing a call connection procedure. The allocated signaling channel is used for establishing a service channel of the mobile user.

S330: The calling mobile user sends a call request to a satellite gateway by using the signaling channel, where the call request carries related information of a called user, for example, information such as a country code or a number of the called user.

S340: The satellite gateway sends a location request message to a terrestrial gateway node by using a terrestrial relay station, so that the terrestrial gateway completes parsing of the information of the called user, for example, information such as a home location or a location.

The terrestrial relay station is a signal forwarding station between the satellite gateway and the terrestrial gateway. The terrestrial relay station receives a signal of the satellite gateway, and forwards the signal to the terrestrial gateway. The terrestrial relay station receives a signal of the terrestrial gateway, and forwards the signal to the satellite gateway.

S350: The terrestrial gateway parses location information of the called user, and feeds back the location information to the satellite gateway by using a location response message. The terrestrial gateway is a gateway node of a terrestrial network, and latest registration of the user is learnt according to latest access or registration of the called user on the terrestrial network, for example, a longitude and latitude of the user, or which base station the user accessed.

S360: The satellite gateway analyzes terrestrial information of the called user, and obtains, with reference to (a process in which a radio node is registered with the satellite node) information, coverage of a satellite node 1 in which the called user is located.

S370: The satellite gateway sends a paging request message to the satellite node 1, to request the satellite node 1 to send a paging message to the called user to call the called user. By using the step, the satellite node 1 successfully pages the called user.

S380: The satellite gateway allocates an end-to-end satellite resource to two users: the calling mobile user and the called mobile user. The end-to-end satellite resource includes an uplink-downlink satellite link resource of the calling mobile user and the satellite node 2, an uplink-downlink satellite link resource of the called mobile user and the satellite node 1, and an inter-satellite connection resource between the satellite node 1 and the satellite node 2.

S390: The satellite gateway feeds back a call success message to the calling mobile user. A connection between the calling mobile user and the called mobile user is successfully established, and the two parties perform voice communication.

In an embodiment, if serving satellites of the calling mobile user and the called mobile user are integrated into one, that is, the satellite node 1 and the satellite node 2 are a same satellite,in this case, the inter-satellite connection resource does not need to be allocated.

In an embodiment, when the allocation of the satellite link resource of the mobile user fails, the mobile user needs to simply switch back to the terrestrial network, and a switching procedure is an access procedure of the current terrestrial network. For example, the terrestrial network is an LTE 4G network, and the mobile user only needs to complete LTE data service access. Alternatively, a signal of the terrestrial network becomes better, and after the mobile user successfully accesses the terrestrial network, the signal may trigger release of the satellite link resource, to complete switching from the satellite to the terrestrial network. A procedure of re-accessing the terrestrial network by the mobile user to establish a voice service in the switching process is the same as that of normally accessing the current terrestrial network. Therefore, the procedure is not described again in the following. Only a procedure of requesting, by the mobile user, to release the satellite network resource is described. In the procedure, a process of releasing the satellite link is the same as the release process in the embodiment corresponding to FIG. 8, and details are not repeated herein again.

Embodiment 5: Voice service: A calling user switches from the ground to a satellite network.

In an embodiment, for some services, communication is performed between users in a point-to-point manner without centralized processing of a given server in a network, for example, the voice service. If a terrestrial link of one user is lost, one user may switch to the satellite network. As shown in FIG. 10, an embodiment of the present invention provides a voice conversation establishment method. In the method, a procedure of switching from a terrestrial network to a satellite network by a user is described, and the procedure may improve performance of signal supplement and switching by the user by using a satellite link.

According to the foregoing embodiment, after receiving a broadcast message of a radio network node (a base station, a base station controller, or another control node), a mobile user updates attribute information and beam information of a satellite node serving the mobile user. The information may be used for quick switching of the user from the ground to a satellite network. When a signal on the ground is excessively poor (there is no signal for a long time) or the user performs an operation to select the satellite network, the user may quickly switch to the satellite network. Using FIG. 10 as an example, the following describes in detail a process in which a data service of a user is switched from the ground to a satellite network.

S410: A calling mobile user sends an access request to a satellite node, where the satellite node is a satellite node covering the calling mobile user.

S420: The satellite node sends an access response to the calling mobile user to indicate successful access, and allocates a signaling channel to the mobile terminal, for completing a call connection procedure.

S430: The calling mobile user sends a call request to a satellite gateway by using the signaling channel, where the call request carries related information of a called user, for example, information such as a country code or a number of the called user.

S440: The satellite gateway sends a location request message to a terrestrial gateway node by using a terrestrial relay station, so that the terrestrial gateway completes parsing of the information of the called user, for example, information such as a home location or a location.

The terrestrial relay station is a signal forwarding station between the satellite gateway and the terrestrial gateway. The terrestrial relay station receives a signal of the satellite gateway, and forwards the signal to the terrestrial gateway. The terrestrial relay station receives a signal of the terrestrial gateway, and forwards the signal to the satellite gateway.

S450: The terrestrial gateway parses location information of the called user, and finds that a session of the called user still camps on a terrestrial network. The terrestrial gateway sends a paging request to a corresponding terrestrial radio node. The radio node is successfully paged. The terrestrial gateway feeds back, to the satellite gateway by using a location response message, that the called user is successfully paged.

The terrestrial gateway is a gateway node of the terrestrial network, and latest registration of the user is learnt according to latest access or registration of the called user on the terrestrial network, for example, a longitude and latitude of the user, or which base station the user accessed.

S460: The satellite gateway allocates an end-to-end satellite resource to the two users, where the end-to-end satellite resource includes an uplink-downlink satellite link resource of the calling user and the satellite node and an inter-satellite connection resource between the satellite node and the satellite gateway.

S470: The satellite gateway feeds back a call success message to the calling mobile user. A connection between the calling mobile user and the called mobile user is successfully established, and the two parties perform voice communication.

The voice service: The calling user switches from a satellite to the terrestrial network.

When a satellite link of the mobile user is lost, the mobile user needs to simply switch back to the terrestrial network, and a switching procedure is an access procedure of the current terrestrial network. For example, the terrestrial network is an LTE 4G network, and the mobile user onlyneeds to complete LTE data service access. Alternatively, a signal of the terrestrial network becomes better, and after the mobile user successfully accesses the terrestrial network, the signal may trigger release of the satellite link resource, to complete switching from the satellite to the terrestrial network. A procedure of re-accessing the terrestrial network by the mobile user to establish a voice service in the switching process is the same as that of normally accessing the current terrestrial network. Therefore, the procedure is not described again in the following. Only a procedure of requesting, by the mobile user, to release the satellite network resource is described. Only the procedure of requesting, by the mobile user, to release the satellite network resource is described. In the procedure, a process of releasing the satellite link is the same as the release process in the embodiment corresponding to FIG. 8, and details are not repeated herein again.

It should be noted that the foregoing uses an example in which the air network is a satellite network. When the air network is a balloon network, the foregoing method procedure is also applicable.

In addition, when the hierarchical network is a hierarchical network formed by a three-layer network including one layer of a satellite network, one layer of a balloon network, and a terrestrial network, a terrestrial radio network node may are registered with a balloon node in the balloon network, or may are registered with a satellite node in the satellite network. A method for registering with the balloon node is similar to the foregoing mentioned method for registering with the satellite node, and the satellite node only needs to be replaced with the balloon node. Certainly, the satellite-to-ground connection resource in the foregoing embodiment is a connection resource of the balloon node and the terrestrial relay station.

Certainly, in a caseof a three-layer network, optionally, a new registration process may be synchronously added: a process in which the balloon node is registered with the satellite node. The registration process is the same as that in Embodiment 1. After the registration succeeds, satellite information is broadcast to the terrestrial radio node.

In an embodiment, a registration process of a hierarchical network (as shown in FIG. 4) formed by a three-layer network including two layers of balloon networks and a terrestrial network is similar to the foregoing, the satellite node registered in the embodiment may be modified to a balloon communication node, and a remaining registration process is similar.

Optionally, a new registration process may be synchronously added: a process in which a low-layer (that is, a flight height is low) balloon node is registered with a high-layer (that is, aflight height is high) balloon node. The registration process is the same as that in Embodiment 1. After the registration succeeds, satellite information is broadcast to the terrestrial radio node.

In an embodiment, a registration process of a hierarchical network (as shown in FIG. 5) formed by a three-layer network including two layers of satellites and a terrestrial network is the same as a process in which a terrestrial node is registered with a satellite node in Embodiment 1. Optionally, a new registration process may be synchronously added: a process in which a low-orbit satellite node is registered with a high-orbit satellite node, and the registration process is the same as that in Embodiment 1. After the registration succeeds, satellite information is broadcast to the terrestrial radio node.

After the solution in the present invention is used, for a hierarchical network and a user of the hierarchical network, a hierarchical network formed by a satellite network and a terrestrial network is used as an example to describe brought technical benefits:
1. If a radio node is successfully registered, a satellite node of a satellite network may store local routing information that uses the radio node as a user. By exchanging the local routing information, the satellite node may form global routing information that uses the radio network node as auser.
2. After the radio node is registered, the registered radio node is broadcast to a mobile user. The mobile user may quickly switch a radio link of a data service or a voice service from the ground to a satellite. For the voice service, only a link of a calling user may be switched, and a called user may be switched to the satellite (in this case, an entire voice link is transmitted in a satellite network), or the called user may continue staying on a terrestrial link (in this case, the voice link may cross two segments: the satellite and a terrestrial network).
3. Because a registration procedure is based on a radio node level, the mobile user does not need to intercept a signal of the satellite network during communication with the terrestrial network. Therefore, power consumption of the mobile user is reduced.
4. Because the registration procedure is based on the radio node level rather than a mobile user level, that thousands of mobile users are registered with the satellite node at a specific interval is omitted, so that a signaling storm is avoided.
5. A radio site registers detailed information with the satellite. Therefore, when the satellite network pages a call, a satellite gateway inquires a terrestrial gateway device. The gateway device only needs to feed back a radio node (a terrestrial base station or a base station controller) latest accessed by the mobile user, and the satellite network may page the mobile user by determining a correct satellite node.

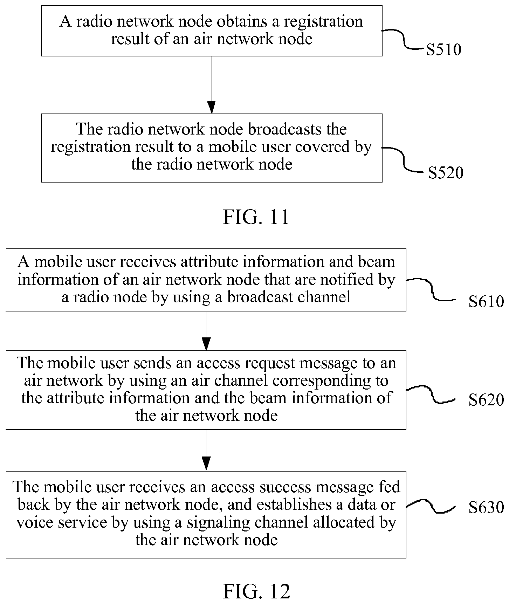

Based on the foregoing embodiment, in conclusion:
As shown in FIG. 11, an embodiment of the present invention provides a hierarchical network registration method, where the method is applied to a hierarchical network formed by a terrestrial network and at least one layer of an air network, and the foregoing method includes the following steps.

S510: A radio network node obtains a registration result of an air network node, where the radio network node is located in the terrestrial network; the air network node is located in the air network, and covers the radio network node; and the registration result includes attribute information and beam information of the air network node.

S520: The radio network node broadcasts the registration result to a mobile user covered by the radio network node.

S510 includes:
S5101: The radio network node initiates a registration request to the air network node.
S5102: The radio network node receives a registration response message of the air network node, to obtain the registration result.

In an embodiment, the radio network node initiates the registration request to the air network node periodically.

In an embodiment, the registration request carries attribute information of the radio network node.

In an embodiment, the radio network node is a base station, and the attribute information is attribute information of the base station.

In an embodiment, the radio network node is a base station controller, and the attribute information is attribute information of the base station controller.

In an embodiment, the radio network node is a base station controller, and the attribute information includes attribute information of the base station controller and attribute information of a base station managed by the base station controller.

In an embodiment, the attribute information of the base station includes: at least one of a number of the base station, a longitude and latitude of the base station, a mobile country code, a mobile network number, a location area code, or a channel list.

The attribute information of the base station controller includes: at least one of a number of the base station controller, a longitude and latitude of the base station controller, a mobile country code, a mobile network number, or a location area code.

In an embodiment, the air network node is a balloon node, or the air network node is a satellite node. The attribute information of the air network node includes: at least one of a satellite number, a satellite orbit, or a satellite height; and the beam information of the air network node includes: at least one of a beam number, a transmitting center frequency, a receiving center frequency, a transmitting polarization, a receiving polarization, bandwidth, or an equivalent isotropically radiated power.

When the air network node is the satellite node or the balloon node, a specific registration and session establishment process is already described in detail in the foregoing embodiments, and details are not described herein again.

Optionally, in an example not part of the invention but for understanding the invention, S510 includes:
S5103: The radio network node monitors a status of the air network node.
S5104: When the radio network node detects that the status of the air network node changes, the radio network node performs interception by using a common channel, to obtain the registration result of the air network node.

Optionally, in an embodiment, S5101 includes:
S51011: The radio network node monitors a status of the air network node.
S51012: When the radio network node detects that the status of the air network node changes, the radio network node initiates the registration request to the air network node covering the radio network node.

Optionally, in an embodiment, S5103 includes:
S51031: The radio network node monitors an orbit of the air network node, a height of the air network node, or a beam direction of the air network node.
S5104 specifically includes: S51041: When the radio network node detects that the orbit of the satellite node, the height of the air network node, or the beam direction of the air network node changes, the radio network node initiates the registration request to the air network node covering the radio network node.

As shown in FIG. 12, an embodiment of the present invention provides a quick switching method of a terrestrial mobile user, where the method is applied to a hierarchical network formed by a terrestrial network and at least one layer of an air network, and the method includes the following steps.

S610: A mobile user receives attribute information and beam information of an air network node that are notified by a radio node by using a broadcast channel.

S620: The mobile user sends an access request message to the air network by using an air channel corresponding to the attribute information and the beam information of the air network node.

S630: The mobile user receives an access success message fed back by the air network node, and establishes a data or voice service by using a signaling channel allocated by the air network node.

In an embodiment, the air network node is a satellite node. The attribute information of the air network node includes: at least one of a satellite number, a satellite orbit, or a satellite height; and the beam information of the air network node includes: at least one of a beam number, a transmitting center frequency, a receiving center frequency, a transmitting polarization, a receiving polarization, bandwidth, or an equivalent isotropically radiated power.

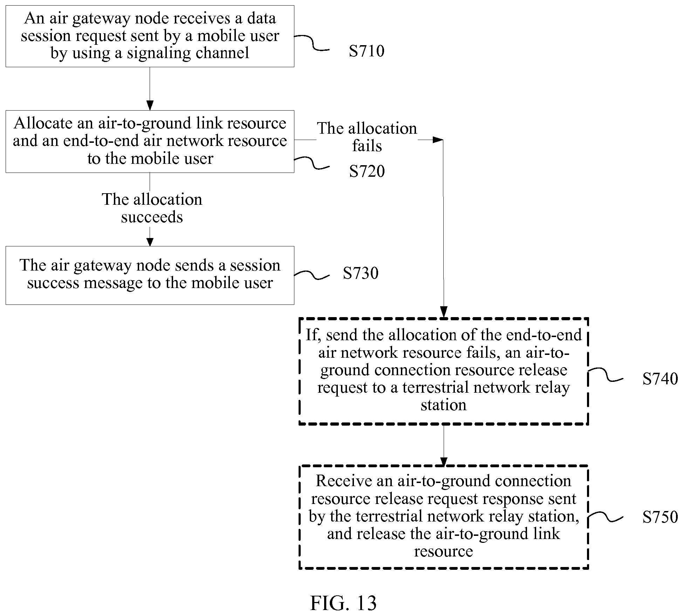

As shown in FIG. 13, an embodiment of the present invention provides a data session establishment method, where the method is applied to a hierarchical network formed by a terrestrial network and at least one layer of an air network, and the method includes the following steps.

S710: An air gateway node receives a data session request sent by a mobile user by using a signaling channel, where the signaling channel is allocated to the mobile user after an air network node receives an access request sent by the mobile user; and the air gateway node and the air network node are located in the air network.

S720: Allocate an air-to-ground link resource and an end-to-end air network resource to the mobile user, where the air-to-ground link resource and the end-to-end air network resource are used for completing, by the mobile user, data service communication by using the air network and the terrestrial network.

Optionally, when the air network is a satellite network, the air-to-ground link resource is the satellite-to-ground connection resource mentioned in step S240 in Embodiment 3; and the end-to-end air network resource is the end-to-end satellite resource mentioned in step S250 in Embodiment 3.

Certainly, if the air network is a balloon network, the air-to-ground link resource is a balloon-to-ground connection resource, and the balloon-to-ground connection resource is used for establishing a channel between a balloon (that is, a balloon node) and a terrestrial relay station. The channel is used for transmitting a data service and data service signaling of the user to an internet and an application server on the ground. The end-to-end air network resource is an end-to-end balloon resource. The resource is used for transmitting the data service of the mobile user between air network nodes. In an embodiment, the end-to-end satellite resource includes an uplink-downlink resource used by the mobile user to access the balloon node and an inter-balloon link resource used by the mobile user for forwarding between the balloon node and a balloon gateway node. If the balloon node and the balloon gateway are a same satellite, the inter-balloon link resource between balloons does not exist. After the allocation succeeds, the balloon gateway notifies the mobile user by using a signaling channel of the balloon node.

S730: The air gateway node sends a session success message to the mobile user, where the air gateway node is a controller of the air network, and is responsible for allocating the air network resource of the mobile user, where the air network resource includesa radio link between the mobile user and the air network node, a radio link for transmitting mobile user data between air network nodes, and a radio link for transmitting the mobile user data between the air network and a terrestrial relay station; and the air network node is a site for the mobile user to access the air network.

In an embodiment, S720 includes:
S721: Allocate the air-to-ground link resource to the terrestrial relay station for the mobile user, to establish a channel between the air network node and the terrestrial relay station, where the channel is used for transmitting a data service of the mobile user between the air network node and the terrestrial relay station.
S722: If the allocation of the air-to-ground connection resource succeeds, allocatethe end-to-end air network resource to the mobile user, where the end-to-end air network resource is used for transmitting the data service of the mobile user between the air network nodes; and the end-to-end air network resource includes a radio link between the mobile user and the air node and a radio link between the air node and the air gateway node.

The terrestrial relay station is responsible for establishing a communication channel between a terrestrial internet and a satellite gateway, and does not process data.

In an embodiment, the method further includes the following steps:
S740: If the allocation of the end-to-end air network resource fails, sendan air-to-ground connection resource release request to the terrestrial network relay station.
S750: Receive an air-to-ground connection resource release request response sent by the terrestrial network relay station, and release the air-to-ground link resource.

In an embodiment, the end-to-end air resource includes an uplink-downlink resource for the mobile user to access the air node.

In an embodiment, the end-to-end air resource further includes a spatial link resource between the air network nodes.

In an embodiment, the air network is a balloon network or a satellite network.

The air gateway node is a satellite gateway, and the satellite gateway is a controller of the satellite network, and is responsible for allocating a satellite resource of the mobile user, where the satellite resource includesa radio link between the mobile user and a satellite node, a radio link for transmitting mobile user data between satellite nodes, and a radio link for transmitting the mobile user data between the satellite node and the terrestrial relay station; the air network node is the satellite node, and the satellite node is a site for the mobile user to access the satellite network. The satellite node and the satellite gateway may be different satellite entities, or may be a same satellite entity.

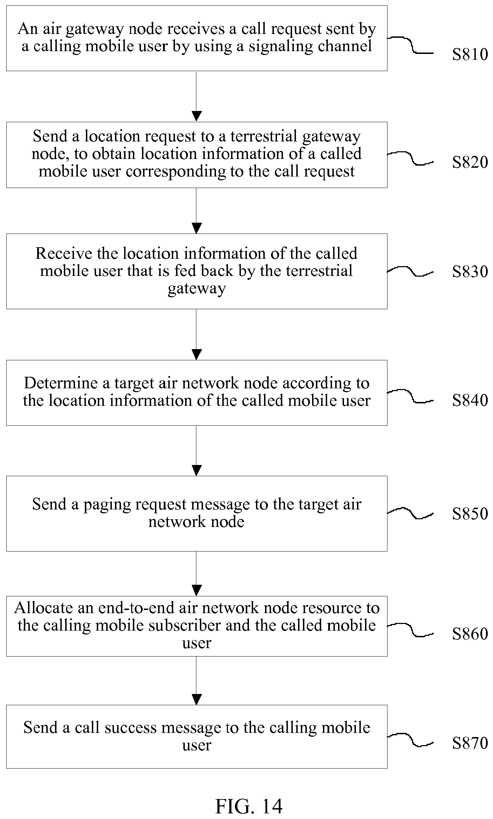

As shown in FIG. 14, an embodiment of the present invention provides a voice conversation establishment method, where the method is applied to a hierarchical network formed by a terrestrial network and at least one layer of an air network, and the method includes the following steps.

S810: An air gateway node receives a call request sent by a calling mobile user by using a signaling channel, where the signaling channel is allocated to the calling mobile user after an air network node receives an access request sent by the calling mobile user.

S820: Send a location request to a terrestrial gateway node, to obtain location information of a called mobile user corresponding to the call request.

S830: Receive the location information of the called mobile user that is fed back by the terrestrial gateway.

S840: Determine a target air network node according to the location information of the called mobile user, where the target air network node is an air network node covering the called mobile user.

S850: Send a paging request message to the target air network node, where the paging request message is used for requesting the target air network node to send a paging message to the called mobile user to call the called user.

S860: Allocate an end-to-end air network node resource to the calling mobile user and the called mobile user, where the end-to-end air network node resource is used for transmitting a voice service of the calling mobile user and the called mobile user between air network nodes.

S870: Send a call success message to the calling mobile user, where the call success message is used for notifying that a connection between the calling mobile user and the called mobile user is successfully established.

In an embodiment, S860 includes the following steps.

1. Allocate an uplink-downlink air link resource to the calling mobile user and an air network node covering the calling mobile user. If the air network is a satellite network, the uplink-downlink air link resource herein is the uplink-downlink satellite link resource of the calling mobile user and the satellite node 2 that is mentioned in step S380 in Embodiment 4.

Similarly, when the air network is a balloon node, the air link resource mentioned above is an uplink-downlink balloon link resource of the calling mobile user and a satellite node 2 (a balloon node covering the calling mobile user).

2. Allocate an uplink-downlink air link resource to the called mobile user and the target air network node. If the air network is a satellite network, the uplink-downlink air link resource herein is the uplink-downlink satellite link resource of the called mobile user and the satellite node 1 that is mentioned in step S380 in Embodiment 4.

Similarly, when the air network is a balloon node, the air link resource mentioned above is an uplink-downlink balloon link resource of the called mobile user and a balloon node 1 (a balloon node covering the called user).

3. In an embodiment, S860 further includes: allocating a spatial link resource to the air network node covering the calling mobile user and the target air network node. If the air network is a satellite network, the spatial link resource herein is the inter-satellite connection resource between the satellite node 1 and the satellite node 2 in step S380 in Embodiment 4.

Similarly, when the air network is a balloon node, the spatial link resource mentioned above is an inter-balloon connection resource between the balloon node 1 and the balloon node 2.

When the air network is a balloon network, for the foregoing link resource, a name of a satellite node may be replaced with a balloon node, and a function of the link resource is similar.

In an embodiment, the air network is a balloon network or a satellite network.

When the air network is a satellite network, the air gateway node is a satellite gateway, and the satellite gateway is a controller of the satellite network, and is responsible for allocating a satellite resource of the mobile user, where the satellite resource includesa radio link between the mobile user and a satellite node, a radio link for transmitting mobile user data between satellite nodes, and a radio link for transmitting the mobile user data between the satellite node and a terrestrial relay station; the air network node is the satellite node, and the satellite node is a site for the mobile user to access the satellite network.

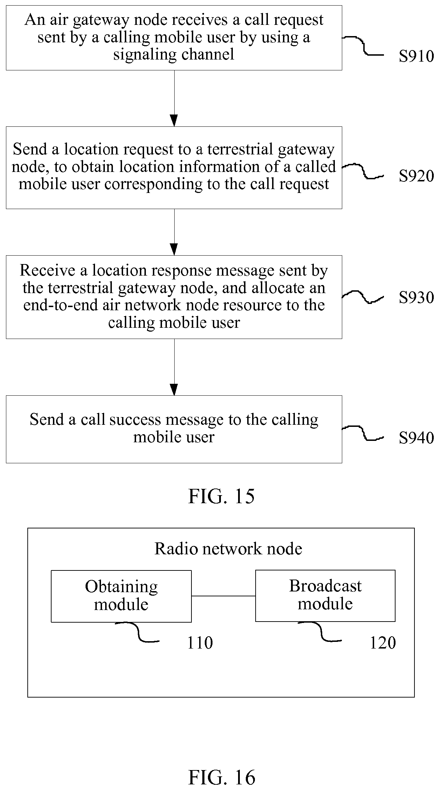

As shown in FIG. 15, an embodiment of the present invention provides a voice conversation establishment method, where the method is applied to a hierarchical network formed by a terrestrial network and at least one layer of an air network, and the method includes the following steps.

S910: An air gateway node receives a call request sent by a calling mobile user by using a signaling channel, where the signaling channel is allocated to the calling mobile user after an air network node receives an access request sent by the calling mobile user.

S920: Send a location request to a terrestrial gateway node, to obtain location information of a called mobile user corresponding to the call request.

S930: Receive a location response message sent by the terrestrial gateway node, and allocate an end-to-end air network node resource to the calling mobile user, where the location response message is used for indicating that a terrestrial network node corresponding to the terrestrial gateway node successfully pages the called mobile user; and the end-to-end air network node resource is used for transmitting a voice service of the calling mobile user and the called mobile user between air network nodes.

S940: Send a call success message to the calling mobile user, where the call success message is used for notifying that a connection between the calling mobile user and the called mobile user is successfully established.

In an embodiment, S930 includes:
S931: Allocate an uplink-downlink air link resource to the calling mobile user and an air network node covering the calling mobile user.
S932: Allocate a spatial link resource between the air gateway node and the air network node covering the calling mobile user.

In an embodiment, the air network is a balloon network, or the air network is a satellite network.

When the air network is a satellite network, the air gateway node is a satellite gateway, and the satellite gateway is a controller of the satellite network, and is responsible for allocating a satellite resource of the mobile user, where the satellite resource includesa radio link between the mobile user and a satellite node, a radio link for transmitting mobile user data between satellite nodes, and a radio link for transmitting the mobile user data between the satellite node and a terrestrial relay station; the air network node is the satellite node, and the satellite node is a site for the mobile user to access the satellite network.

After the solution in the present invention is used, technical benefits fora hierarchical network and a user of the hierarchical network are as follows:
1. If a radio network node is successfully registered, an air network node of an air network may store local routing information that uses the radio network node as a user. By exchanging the local routing information, the air network node may form global routing information that uses the radio network node as auser.
2. After the radio network node is registered, the registered radio network node is broadcast to a mobile user. The mobile user may quickly switch a radio link of a data service or a voice service from the ground to the air network node. For the voice service, only a link of a calling user may be switched, and a called user may be switched to the air network node (in this case, an entire voice link is transmitted in an air network), or the called user may continue staying on a terrestrial link (in this case, the voice link may cross two segments: the air network node and a terrestrial network).
3. Because a registration procedure is based on a radio network node level, the mobile user does not need to intercept a signal of the air network during communication with the terrestrial network. Therefore, power consumption of the mobile user is reduced.
4. Because the registration procedure is based on the radio network node level rather than a mobile user level, that thousands of mobile users are registered withthe air network node at a specific interval is omitted, so that a signaling storm is avoided.
5. A radio site registers detailed information with the air network node. Therefore, when the air network pages a call, an air network node gateway inquires a terrestrial gateway device. The gateway device only needs to feed back a radio network node (a terrestrial base station or a base station controller) latest accessed by the mobile user, and the air network may page the mobile user by determining a correct air network node.

As shown in FIG. 16, an embodiment of the present invention provides a radio network node, where the radio network node includes:
an obtaining module 110, configured to obtain a registration result of an air network node, where the radio network node is located in a terrestrial network; the air network node is located in the air network, and covers the radio network node; and the registration result includes attribute information and beam information of the air network node; and
a broadcast module 120, configured to: add the registration result obtained by the obtaining module 110 into a broadcast message, and broadcast the broadcast message to a mobile user covered by the radio network node.

the obtaining module 110 includes:
a sending unit 1101, configured to initiate a registration request to the air network node; and
a receiving unit 1102, configured to receive a registration response message that is in response to the registration request messagesent by the sending unit 1101 and that is sent by the air network node, to obtain the registration result.

In an example not part of the invention but helpful for understanding the invention, the obtaining module 110 includes:
a monitoring unit 1103, configured to monitor a status of the air network node; and
an interception unit 1104, configured to: when the monitoring unit 1103 detects that the status of the air network node changes, perform interception by using a common channel, to obtain the registration result of the air network node.

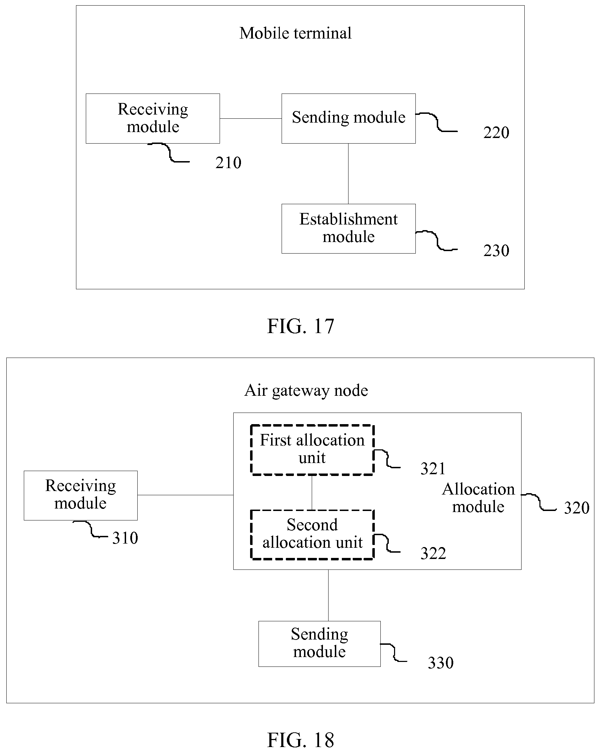

As shown in FIG. 17, an embodiment of the present invention provides a mobile terminal, where the terminal includes:
a receiving module 210, configured to receive attribute information and beam information of an air network node that are notified by a radio node by using a broadcast channel;
a sending module 220, configured to send an access request message to an air network by using an air channel corresponding to the attribute information and the beam information of the air network node that are received by the receiving module 210; and
an establishment module 230, configured to: receive an access success message fed back by the air network node, and establish a data or voice service by using a signaling channel allocated by the air network node.

In an embodiment, the air network node is a satellite node; the attribute information of the air network node includes: at least one of a satellite number, a satellite orbit, or a satellite height; and the beam information of the air network node includes: at least one of a beam number, a transmitting center frequency, a receiving center frequency, a transmitting polarization, a receiving polarization, bandwidth, or an equivalent isotropically radiated power.

As shown in FIG. 18, an embodiment of the present invention provides an air gateway node, where the air gateway node includes:
a receiving module 310, configured to receive a data session request sent by a mobile user by using a signaling channel, where the signaling channel is allocated to the mobile user after an air network node receives an access request sent by the mobile user; and the air gateway node and the air network node are located in the air network;
an allocation module 320, configured to allocate an air-to-ground link resource and an end-to-end air network resource to the mobile user, where the air-to-ground link resource and the end-to-end air network resource are used for completing, by the mobile user, data service communication by using the air network and the terrestrial network; and
a sending module 330, configured to send a session success message to the mobile user, where
after the allocation module 320 successfully performs the allocation, the sending module sends the session success message to the mobile user. The air gateway node is a controller of the air network, and is responsible for allocating the air network resource of the mobile user, where the air network resource includesa radio link between the mobile user and the air network node, a radio link for transmitting mobile user data between air network nodes, and a radio link for transmitting the mobile user data between the air network and a terrestrial relay station; and the air network node is a site for the mobile user to access the air network.

In an embodiment, as shown in a dashed box in FIG. 18, the allocation module 320 includes:
a first allocation unit 321, configured to allocate the air-to-ground connection resource to the terrestrial relay station for the mobile user, to establish a channel between the air network node and the terrestrial relay station, where the channel is used for transmitting a data service of the mobile user between the air network node and the terrestrial relay station; and
a second allocation unit 322, configured to: after the first allocation unit 321 successfully allocates the air-to-ground connection resource, allocate the end-to-end air network resource to the mobile user, where the end-to-end air network resource is used for transmitting the data service of the mobile user between the air network nodes; and the end-to-end air network resource includes a radio link between the mobile user and the air node and a radio link between the air node and the air gateway node.

In an embodiment, if the allocation module 320 fails in allocating the end-to-end air network resource, the sending module is further configured to send an air-to-ground connection resource release request to the terrestrial network relay station; and
the receiving module 310 is further configured to: receive an air-to-ground connection resource release request response sent by the terrestrial network relay station, and release the air-to-ground connection resource.

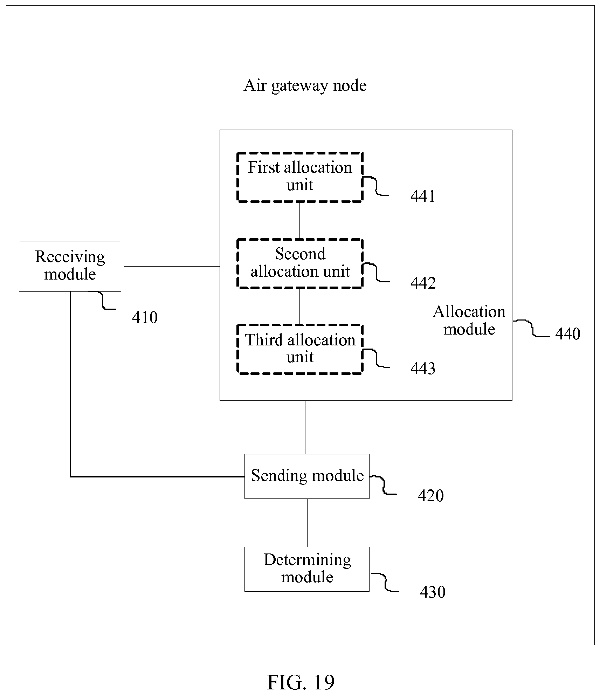

As shown in FIG. 19, an embodiment of the present invention provides an air gateway node, where the air gateway node includes:
a receiving module 410, configured to receive a call request sent by a calling mobile user by using a signaling channel, where the signaling channel is allocated to the calling mobile user after an air network node receives an access request sent by the calling mobile user;
a sending module 420, configured to send a location request to a terrestrial gateway node, to obtain location information of a called mobile user corresponding to the call request received by the receiving module 410, where
the receiving module 410 is further configured to receive the location information of the called mobile user that is fed back by the terrestrial gateway;
a determining module 430, configured to determine a target air network node according to the location information of the called mobile user that is obtained by the sending module, where the target air network node is an air network node covering the called mobile user, where
the sending module 420 is further configured to send a paging request message to the target air network node determined by the determining module 430, where the paging request message is used for requesting the target air network node to send a paging message to the called mobile user, to call the called user; and
an allocation module 440, configured to allocate an end-to-end air network node resource to the calling mobile user and the called mobile user, where the end-to-end air network node resource is used for transmitting a voice service of the calling mobile user and the called mobile user between air network nodes, where
the sending module 420 is further configured to send a call success message to the calling mobile user, where the call success message is used for notifying that a connection between the calling mobile user and the called mobile user is successfully established.

In an embodiment, the allocation module 440 includes:
a first allocation unit 441, configured to allocate an uplink-downlink air link resource to the calling mobile user and an air network node covering the calling mobile user; and
a second allocation unit 442, configured to allocate an uplink-downlink air link resource to the called mobile user and the target air network node.

In an embodiment, the allocation module further includes:
a third allocation unit 443, configured to allocate a spatial link resource to the air network node covering the calling mobile user and the target air network node.

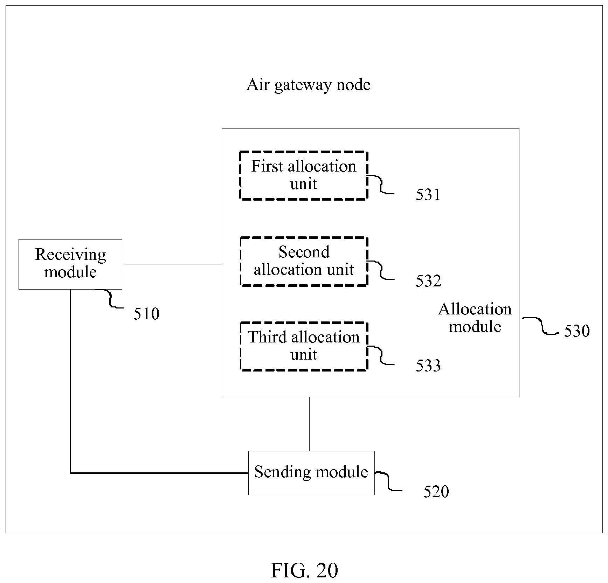

As shown in FIG. 20, an embodiment of the present invention provides an air gateway node, where the air gateway node includes:
a receiving module 510, configured to receive a call request sent by a calling mobile user by using a signaling channel, where the signaling channel is allocated to the calling mobile user after an air network node receives an access request sent by the calling mobile user;
a sending module 520, configured to send a location request to a terrestrial gateway node, to obtain location information of a called mobile user corresponding to the call request received by the receiving module 510; and
an allocation module 530, configured to: receive a location response message sent by the terrestrial gateway node, and allocate an end-to-end air network node resource to the calling mobile user, where the location response message is used for indicating that a terrestrial network node corresponding to the terrestrial gateway node successfully pages the called mobile user; and the end-to-end air network node resource is used for transmitting a voice service of the calling mobile user and the called mobile user between air network nodes, where
the sending module 520 is further configured to send a call success message to the calling mobile user, where the call success message is used for notifying that a connection between the calling mobile user and the called mobile user is successfully established.

In an embodiment, the allocation module 530 includes:
a first allocation unit 531, configured to allocate an uplink-downlink air link resource to the calling mobile user and an air network node covering the calling mobile user; and
a second allocation unit 532, configured to allocate a spatial link resource between the air gateway node and the air network node covering the calling mobile user.

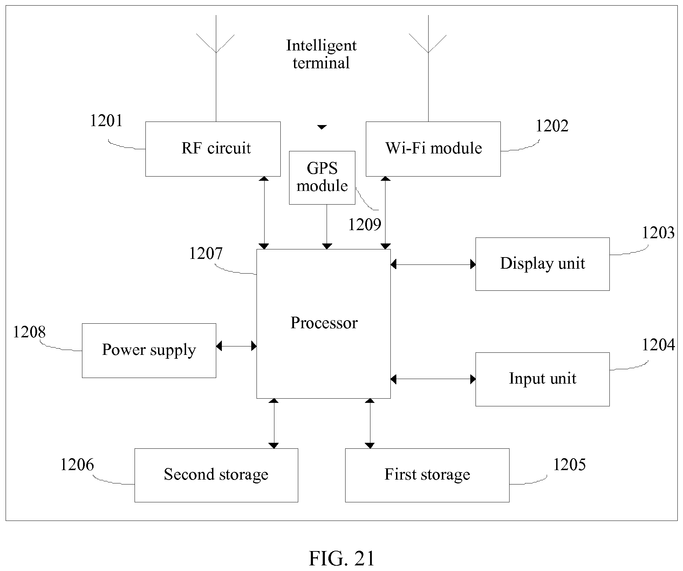

Referring to FIG. 21, FIG. 21 is a schematic structural diagram of an intelligent terminal according to an embodiment of the present invention. The intelligent terminal includes hardware modules such as an RF circuit 1201, a Wi-Fi module 1202, a display unit 1203, an input unit 1204, a first storage 1205, a second storage 1206, a processor 1207, a power supply 1208, and a GPS module 1209. The terminal 1200 may be a mobile phone, a tablet computer, a PDA (Personal Digital Assistant, personal digital assistant), or a vehicle-mounted computer.

The RF circuit 1201 is configured to receive and transmit a communication signal. The Wi-Fi module 1202 is configured to connect a network and scan a network signal. The RF circuit 1201 and/or the Wi-Fi module 1202 may be in contact with a radio base station, to obtain a current location coordinate of the intelligent terminal.

The display unit 1203 is configured to display a user interaction interface. The display unit 1203 may be configured to display information input by a user or information provided for a user and various menu interfaces of the intelligent terminal. The display unit 1203 may include a display panel. Optionally, the display panel may be configured by using an LCD (Liquid Crystal Display, liquid crystal display), an OLED (Organic Light-Emitting Diode, organic light-emitting diode), or the like. In specific implementation, the touch panel covers the display panel, to form a touch display screen. The processor 1207 provides a corresponding visual output on the touch display screen according to a type of a touch event.

The input unit 1204 may be configured to: receive input digit or character information, receive an operation of switching an application programming interface by the user, generate a switching signal, and generate a signal input related to a user setting and function control of the terminal. Specifically, in this embodiment of the present invention, the input unit 1204 may include the touch panel, which is also referred to as a touch screen, and may collect a touch operation of the user on or near the touch panel (such as an operation of the user on the touch panel by using any suitable object or accessory such as a finger or a stylus). The touch panel may be a resistive, capacitive, infrared, or surface sound wave touch panel. In addition to the touch panel, the input unit 1204 may further include another input device, including but not limited to one or more of a physical keyboard, a functional key (such as a volume control key or an on/off key), a track ball, a mouse, or a joystick.

The first storage 1205 stores information about a preset quantity ofAPPs and interfaces of the terminal. It may be understood that the second storage 1206 may be an external storage of the terminal 1200, and the first storage 1205 may be a memory of the intelligent terminal. The first storage 1205 may be one of an NVRAM nonvolatile random access memory, a DRAM dynamic random access memory, an SRAM static random access memory, a flash memory, or the like. An operating system running on the intelligent terminal is generally installed on the first storage 1205. The second storage 1206 may be a hard disk, an optical disc, a USB flash drive, a floppy disk, a tape drive, a cloud server, or the like. Optionally, at present, some third-party APPs may be installed on the second storage 1206.

The processor 1207 is a control center of the intelligent terminal, and is connected to various parts of the entire terminal by using various interfaces and lines. By running or executing a software program and/or module stored in the first storage 1205, and invoking data stored in the second storage 1206, the processor 1207 performs various functions and data processing of the intelligent terminal. Optionally, the processor 1207 may include one or more processing units.

The power supply 1208 may supply power to the entire terminal, and includes various types of lithium batteries.

The GPS module 1209 is configured to obtain a location coordinate of the intelligent terminal.

When a given program installed in the first storage 1205 receives an instruction of the processor, the following steps are executed.
1. Receive attribute information and beam information of an air network node that are notified by a radio node by using a broadcast channel.
2. Send an access request message to an air network by using an air channel corresponding to the received attribute information and beam information of the air network node.
3. Receive an access success message fed back by the air network node, and establish a data or voice service by using a signaling channel allocated by the air network node.

After the solution in the present invention is used, technical benefits for a hierarchical network and a user of the hierarchical network are as follows:
1. If a radio network node is successfully registered, an air network node of an air network may store local routing information that uses the radio network node as a user. By exchanging the local routing information, the air network node may form global routing information that uses the radio network node as a user.
2. After the radio network node is registered, the registered radio network node is broadcast to a mobile user. The mobile user may quickly switch a radio link of a data service or a voice service from the ground to the air network node. For the voice service, only a link of a calling user may be switched, and a called user may be switched to the air network node (in this case, an entire voice link is transmitted in an air network), or the called user may continue staying on a terrestrial link (in this case, the voice link may cross two segments: the air network node and a terrestrial network).
3. Because a registration procedure is based on a radio network node level, the mobile user does not need to intercept a signal of the air network during communication with the terrestrial network. Therefore, power consumption of the mobile user is reduced.
4. Because the registration procedure is based on the radio network node level rather than a mobile user level, that thousands of mobile users are registered with the air network node at a specific interval is omitted, so that a signaling storm is avoided.
5. A radio site registers detailed information with the air network node. Therefore, when the air network pages a call, an air network node gateway inquires a terrestrial gateway device. The gateway device only needs to feed back a radio network node (a terrestrial base station or a base station controller) latest accessed by the mobile user, and the air network may page the mobile user by determining a correct air network node.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The storage medium may include: a magnetic disk, an optical disc, a read-only memory (Read-Only Memory, ROM), or a random access memory (Random Access Memory, RAM).

## Claims

1. A hierarchical network registration method, wherein the method is applied to a hierarchical network formed by a terrestrial network and at least one layer of an air network, and the method comprises:
obtaining (S510), by a radio network node, a registration result of an air network node, wherein the radio network node is located in the terrestrial network; the air network node is located in the air network, and covers the radio network node; and the registration result comprises attribute information and beam information of the air network node; and
broadcasting (S520), by the radio network node, the registration result to a mobile user covered by the radio network node;
wherein the obtaining, by a radio network node, a registration result of an air network node comprises:
initiating (S5101), by the radio network node, a registration request to the air network node; and
receiving (S5102), by the radio network node, a registration response message from the air network node, to obtain the registration result.

2. The registration method according to claim 1, wherein the initiating, by the radio network node, a registration request to the air network node comprises:
monitoring, by the radio network node, a status of the air network node; and
initiating, by the radio network node, when the radio network node detects that the status of the air network node changes, the registration request to the air network node covering the radio network node.

3. The registration method according to claim 2, wherein the monitoring, by the radio network node, a status of the air network node comprises:
monitoring, by the radio network node, an orbit of the air network node, a height of the air network node, or a beam direction of the air network node; and
the initiating, by the radio network node, when the radio network node detects that the status of the air network node changes, the registration request to the air network node covering the radio network node specifically comprises:
initiating, by the radio network node, when the radio network node detects that the orbit of the air network node, the height of the air network node, or the beam direction of the air network node changes, the registration request to the air network node covering the radio network node.

4. The registration method according to claim 1, wherein the initiating, by the radio network node, a registration request to the air network node comprises:
initiating, by the radio network node, a registration request to the air network node periodically.

5. The registration method according to claim 1, 3, or 4, wherein the registration request carries attribute information of the radio network node.

6. The registration method according to claim 5, wherein the radio network node is a base station, and the attribute information is attribute information of the base station.

7. The registration method according to claim 5, wherein the radio network node is a base station controller, and the attribute information is attribute information of the base station controller.

8. The registration method according to claim 5, wherein the radio network node is a base station controller, and the attribute information comprises attribute information of the base station controller and attribute information of a base station managed by the base station controller.

9. The registration method according to claim 6 or 8, wherein the attribute information of the base station comprises: at least one of a number of the base station, a longitude and latitude of the base station, a mobile country code, a mobile network number, a location area code, or a channel list.

10. The registration method according to claim 7 or 8, wherein the attribute information of the base station controller comprises: at least one of a number of the base station controller, a longitude and latitude of the base station controller, a mobile country code, a mobile network number, or a location area code.

11. The registration method according to any one of claims 1 to 10, wherein the air network node is a balloon node.

12. The registration method according to any one of claims 1 to 10, wherein the air network node is a satellite node;
the attribute information of the air network node comprises: at least one of a satellite number, a satellite orbit, or a satellite height; and
the beam information of the air network node comprises: at least one of a beam number, a transmitting center frequency, a receiving center frequency, a transmitting polarization, a receiving polarization, bandwidth, or an equivalent isotropically radiated power.

13. A radio network node, wherein the radio network node comprises:
an obtaining module (110), configured to obtain a registration result of an air network node, wherein the radio network node is located in a terrestrial network; the air network node is located in the air network, and covers the radio network node; and the registration result comprises attribute information and beam information of the air network node; and
a broadcast module (120), configured to: add the registration result obtained by the obtaining module into a broadcast message, and broadcast the broadcast message to a mobile user covered by the radio network node;
wherein the obtaining module (110) comprises:
a sending unit (S1101), configured to initiate a registration request to the air network node; and
a receiving unit (S1102), configured to receive a registration response message from the air network node, to obtain the registration result.

## Patentansprüche

1. Registrierungsverfahren für ein hierarchisches Netz, wobei das Verfahren auf ein hierarchisches Netz angewendet wird, das durch ein terrestrisches Netz und mindestens eine Schicht eines Drahtlosnetzes gebildet wird, und das Verfahren Folgendes umfasst:
Erhalten (S510) durch einen Funknetzknoten eines Registrierungsergebnisses eines Drahtlosnetzknotens, wobei sich der Funknetzknoten in dem terrestrischen Netz befindet; wobei sich der Drahtlosnetzknoten in dem Drahtlosnetz befindet und den Funknetzknoten abdeckt; und das Registrierungsergebnis Attributinformationen und Strahlinformationen des Drahtlosnetzknotens umfasst; und
Senden (S520) durch den Funknetzknoten des Registrierungsergebnisses an einen Mobilfunkanwender, der durch den Funknetzknoten abgedeckt wird;
wobei das Erhalten durch einen Funknetzknoten eines Registrierungsergebnisses eines Drahtlosnetzknotens Folgendes umfasst:
Einleiten (S5101) durch den Funknetzknoten einer Registrierungsanforderung an den Drahtlosnetzknoten; und
Empfangen (S5102) durch den Funknetzknoten einer Registrierungsantwortnachricht von dem Drahtlosnetzknoten, um das Registrierungsergebnis zu erhalten.

2. Registrierungsverfahren nach Anspruch 1, wobei das Einleiten durch den Funknetzknoten einer Registrierungsanforderung an den Drahtlosnetzknoten Folgendes umfasst:
Überwachen durch den Funknetzknoten eines Zustands des Drahtlosnetzknotens, und
Einleiten durch den Funknetzknoten, wenn der Funknetzknoten detektiert, dass sich der Zustand des Drahtlosnetzknotens ändert, der Registrierungsanforderung an den Drahtlosnetzknoten, der den Funknetzknoten abdeckt.

3. Registrierungsverfahren nach Anspruch 2, wobei das Überwachen durch den Funknetzknoten eines Zustands des Drahtlosnetzknotens Folgendes umfasst:
Überwachen durch den Funknetzknoten eines Orbits des Drahtlosnetzknotens, einer Höhe des Drahtlosnetzknotens oder einer Strahlrichtung des Drahtlosnetzknotens, und
wobei das Einleiten durch den Funknetzknoten dann, wenn der Funknetzknoten detektiert, dass sich der Zustand des Drahtlosnetzknotens ändert, der Registrierungsanforderung an den Drahtlosnetzknoten, der das Funknetzknoten abdeckt, speziell Folgendes umfasst:
Einleiten durch den Funknetzknoten dann, wenn der Funknetzknoten detektiert, dass sich der Orbit des Drahtlosnetzknotens, die Höhe des Drahtlosnetzknotens oder die Strahlrichtung des Drahtlosnetzknotens ändert, der Registrierungsanforderung an den Drahtlosnetzknoten, der den Funknetzknoten abdeckt.

4. Registrierungsverfahren nach Anspruch 1, wobei das Einleiten durch den Funknetzknoten einer Registrierungsanforderung an den Drahtlosnetzknoten Folgendes umfasst:
periodisch Einleiten durch den Funknetzknoten einer Registrierungsanforderung an den Drahtlosnetzknoten.

5. Registrierungsverfahren nach Anspruch 1, 3 oder 4, wobei die Registrierungsanforderung Attributinformationen des Funknetzknotens überträgt.

6. Registrierungsverfahren nach Anspruch 5, wobei der Funknetzknoten eine Basisstation ist und die Attributinformationen Attributinformationen der Basisstation sind.

7. Registrierungsverfahren nach Anspruch 5, wobei der Funknetzknoten eine Basisstationssteuereinheit ist und die Attributinformationen Attributinformationen der Basisstationssteuereinheit sind.

8. Registrierungsverfahren nach Anspruch 5, wobei der Funknetzknoten eine Basisstationssteuereinheit ist und die Attributinformationen Attributinformationen der Basisstationssteuereinheit und Attributinformationen einer Basisstation, die durch die Basisstationssteuereinheit gemanagt wird, umfassen.

9. Registrierungsverfahren nach Anspruch 6 oder 8, wobei die Attributinformationen der Basisstation Folgendes umfassen: mindestens eines einer Nummer der Basisstation, eines Längengrads und eines Breitengrads der Basisstation, einer Mobilfunklandesvorwahl, einer Mobilfunknetznummer, einer Ortsvorwahl oder einer Kanalliste.

10. Registrierungsverfahren nach Anspruch 7 oder 8, wobei die Attributinformationen der Basisstationssteuereinheit Folgendes umfassen: mindestens eines einer Nummer der Basisstationssteuereinheit, eines Längengrads und eines Breitengrads der Basisstationssteuereinheit, einer Mobilfunklandesvorwahl, einer Mobilfunknetznummer oder einer Ortsvorwahl.

11. Registrierungsverfahren nach einem der Ansprüche 1 bis 10, wobei der Drahtlosnetzknoten ein Ballonknoten ist.

12. Registrierungsverfahren nach einem der Ansprüche 1 bis 10, wobei der Drahtlosnetzknoten ein Satellitenknoten ist;
wobei die Attributinformationen des Drahtlosnetzknotens Folgendes umfassen:
mindestens eines einer Satellitennummer, eines Satellitenorbits oder einer Satellitenhöhe; und
die Strahlinformationen des Drahtlosnetzknotens Folgendes umfassen: mindestens eines einer Strahlnummer, einer Sendemittenfrequenz, einer Empfangsmittenfrequenz, einer Sendungspolarisierung, einer Empfangspolarisierung, einer Bandbreite oder einer äquivalenten isotrop ausgestrahlten Leistung.

13. Funknetzknoten, wobei der Funknetzknoten Folgendes umfasst:
ein Erfassungsmodul (110), das konfiguriert ist, ein Registrierungsergebnis eines Drahtlosnetzknotens zu erhalten, wobei sich der Funknetzknoten in einem terrestrischen Netz befindet; sich der Drahtlosnetzknoten in dem Drahtlosnetz befindet und den Funknetzknoten abdeckt; und das Registrierungsergebnis Attributinformationen und Strahlinformationen des Drahtlosnetzknotens umfasst; und
ein Sendungsmodul (120), das konfiguriert ist zum: Hinzufügen des durch das Erfassungsmodul erhaltenen Registrierungsergebnisses in eine Sendungsnachricht und Senden der Sendungsnachricht an einem Mobilfunkanwender, der durch den Funknetzknoten abgedeckt wird;
wobei das Erfassungsmodul (110) Folgendes umfasst:
eine Sendeeinheit (S1101), die konfiguriert ist, eine Registrierungsanforderung an den Drahtlosnetzknoten zu senden; und
eine Empfangseinheit (S1102), die konfiguriert ist, eine Registrierungsantwortnachricht von dem Drahtlosnetzknoten zu empfangen, um das Registrierungsergebnis zu erhalten.

## Revendications

1. Procédé d'enregistrement de réseau hiérarchique, le procédé étant appliqué à un réseau hiérarchique formé par un réseau terrestre et au moins une couche d'un réseau aérien, et le procédé comprenant :
l'obtention (S510), par un nœud de réseau radio, d'un résultat d'enregistrement d'un nœud de réseau aérien, le nœud de réseau radio étant situé dans le réseau terrestre ; le nœud de réseau aérien étant situé dans le réseau aérien, et couvrant le nœud de réseau radio ; et le résultat de l'enregistrement comprenant des informations d'attributs et des informations de faisceau du nœud de réseau aérien ; et
la radiodiffusion (S520), par le nœud de réseau radio, du résultat d'enregistrement à un utilisateur mobile couvert par le nœud de réseau radio ;
l'obtention, par un nœud de réseau radio, d'un résultat d'enregistrement d'un nœud de réseau aérien comprenant :
le lancement (S5101), par le nœud de réseau radio, d'une demande d'enregistrement au nœud de réseau aérien ; et
la réception (S5102), par le nœud de réseau radio, d'un message de réponse d'enregistrement venant du nœud de réseau aérien, afin d'obtenir le résultat de l'enregistrement.

2. Procédé d'enregistrement selon la revendication 1, dans lequel le lancement, par le nœud de réseau radio, d'une demande d'enregistrement au nœud de réseau aérien comprend :
la surveillance, par le nœud de réseau radio, d'un état du nœud de réseau aérien ; et
le lancement, par le nœud de réseau radio, lorsque le nœud de réseau radio détecte que l'état du nœud de réseau aérien change, de la demande d'enregistrement au nœud de réseau aérien couvrant le nœud de réseau radio.

3. Procédé d'enregistrement selon la revendication 2, dans lequel la surveillance, par le nœud de réseau radio, d'un état du nœud de réseau aérien comprend :
la surveillance, par le nœud de réseau radio, d'une orbite du nœud de réseau aérien, d'une hauteur du nœud de réseau aérien, ou d'une direction de faisceau du nœud de réseau aérien ; et
le lancement, par le nœud de réseau radio, lorsque le nœud de réseau radio détecte que l'état du nœud de réseau aérien change, de la demande d'enregistrement au nœud de réseau aérien couvrant le nœud de réseau radio comprenant :
le lancement, par le nœud de réseau radio, lorsque le nœud de réseau radio détecte que l'orbite du nœud de réseau aérien, la hauteur du nœud de réseau aérien ou la direction du faisceau du nœud de réseau aérien change, de la demande d'enregistrement au nœud de réseau aérien couvrant le nœud de réseau radio.

4. Procédé d'enregistrement selon la revendication 1, dans lequel le lancement, par le nœud de réseau radio, d'une demande d'enregistrement au nœud de réseau aérien comprend :
le lancement, par le nœud de réseau radio, d'une demande d'enregistrement au nœud de réseau aérien périodiquement.

5. Procédé d'enregistrement selon la revendication 1, 3 ou 4, dans lequel la demande d'enregistrement achemine des informations d'attributs du nœud de réseau radio.

6. Procédé d'enregistrement selon la revendication 5, dans lequel le nœud de réseau radio est une station de base, et les informations d'attributs sont des informations d'attributs de la station de base.

7. Procédé d'enregistrement selon la revendication 5, dans lequel le nœud de réseau radio est un contrôleur de station de base, et les informations d'attributs sont des informations d'attributs de ce contrôleur de station de base.

8. Procédé d'enregistrement selon la revendication 5, dans lequel le nœud de réseau radio est un contrôleur de station de base, et les informations d'attributs comprennent des informations d'attributs du contrôleur de station de base et des informations d'attributs d'une station de base gérée par le contrôleur de station de base.

9. Procédé d'enregistrement selon la revendication 6 ou 8, dans lequel les informations d'attributs de la station de base comprennent : au moins soit un numéro de la station de base, soit une longitude et une latitude de la station de base, soit un code de pays mobile, soit un numéro de réseau mobile, soit un code de zone de localisation, soit une liste de canaux.

10. Procédé d'enregistrement selon la revendication 7 ou 8, dans lequel les informations d'attributs du contrôleur de station de base comprennent : au moins soit un numéro du contrôleur de station de base, soit une longitude et une latitude du contrôleur de station de base, soit un code de pays mobile, soit un numéro de réseau mobile, soit un code de zone de localisation.

11. Procédé d'enregistrement selon l'une quelconque des revendications 1 à 10, dans lequel le nœud de réseau aérien est un nœud ballon.

12. Procédé d'enregistrement selon l'une quelconque des revendications 1 à 10, dans lequel le nœud de réseau aérien est un nœud satellite ;
les informations d'attributs du nœud de réseau aérien comprennent : au moins soit un numéro de satellite, soit une orbite de satellite, soit une hauteur de satellite ; et
les informations de faisceau du nœud de réseau aérien comprennent : au moins soit un numéro de faisceau, soit une fréquence de centre de transmission, soit une fréquence de centre de réception, soit une polarisation de transmission, soit une polarisation de réception, soit une bande passante, soit une puissance isotrope rayonnée équivalente.

13. Nœud de réseau radio, le nœud de réseau radio comprenant :
un module d'obtention (110), configuré de façon à obtenir un résultat d'enregistrement d'un nœud de réseau aérien, le nœud de réseau radio étant situé dans un réseau terrestre ; le nœud de réseau aérien étant situé dans le réseau aérien, et couvrant le nœud de réseau radio ; et le résultat de l'enregistrement comprenant des informations d'attributs et des informations de faisceau du nœud de réseau aérien ; et
un module de radiodiffusion (120), configuré de façon à : ajouter le résultat de l'enregistrement obtenu par le module d'obtention dans un message radiodiffusé, et à radiodiffuser le message radiodiffusé à un utilisateur mobile couvert par le nœud de réseau radio ;
le module d'obtention (110) comprenant :
une unité d'envoi (S1101) configurée de façon à lancer une demande d'enregistrement au nœud de réseau aérien ; et
une unité de réception (S1102), configurée de façon à recevoir un message de réponse d'enregistrement venant du nœud de réseau aérien, afin d'obtenir le résultat de l'enregistrement.
